(19) Europäisches Patentamt
European Patent Office
Office européen des brevets

(11) EP 4 410 891 B1

(12) EUROPEAN PATENT SPECIFICATION

(45) Date of publication and mention of the grant of the patent:
**08.07.2026 Bulletin 2026/28**

(21) Application number: **21966611.2**

(22) Date of filing: **06.12.2021**

(51) International Patent Classification (IPC):
***C08L 67/02*** (2006.01) ***C08G 63/183*** (2006.01)
***C08G 63/16*** (2006.01) ***C08G 63/78*** (2006.01)
***C08K 5/07*** (2006.01)

(52) Cooperative Patent Classification (CPC):
(C-Sets available)
**C08K 5/07; C08G 63/183; C08G 63/78;**
**C08L 67/02;** C08K 2003/265 (Cont.)

(86) International application number:
**PCT/CN2021/135736**

(87) International publication number:
**WO 2023/102683 (15.06.2023 Gazette 2023/24)**

# (54) PBAT RESIN COMPOSITION, AND PREPARATION METHOD THEREFOR AND USE THEREOF

PBAT-HARZZUSAMMENSETZUNG UND HERSTELLUNGSVERFAHREN DAFÜR UND VERWENDUNG DAVON

COMPOSITION DE RÉSINE PBAT, PROCÉDÉ DE PRÉPARATION ASSOCIÉ ET UTILISATION CORRESPONDANTE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**07.08.2024 Bulletin 2024/32**

(73) Proprietor: **Wanhua Chemical Group Co., Ltd.**
**Yantai, Shandong 264006 (CN)**

(72) Inventors:
- **HU, Jianglin**
  **Yantai, Shandong 264006 (CN)**
- **GAO, Mengyun**
  **Yantai, Shandong 264006 (CN)**
- **CHEN, Jianxu**
  **Yantai, Shandong 264006 (CN)**
- **LIU, Yan**
  **Yantai, Shandong 264006 (CN)**
- **WEI, Yuntao**
  **Yantai, Shandong 264006 (CN)**
- **JIANG, Qingmei**
  **Yantai, Shandong 264006 (CN)**
- **WANG, Yulong**
  **Yantai, Shandong 264006 (CN)**
- **FANG, Wenjuan**
  **Yantai, Shandong 264006 (CN)**
- **WANG, Ximeng**
  **Yantai, Shandong 264006 (CN)**
- **WANG, Lei**
  **Yantai, Shandong 264006 (CN)**
- **LI, Yuan**
  **Yantai, Shandong 264006 (CN)**

(74) Representative: **Balder IP Law, S.L.**
**Paseo de la Castellana 93**
**5ª planta**
**28046 Madrid (ES)**

(56) References cited:

| | |
|---|---|
| CN-A- 105 585 826 | CN-A- 105 585 826 |
| CN-A- 105 585 827 | CN-A- 105 585 827 |
| CN-A- 105 713 356 | CN-A- 105 713 356 |
| JP-A- 2018 039 892 | US-A- 5 250 659 |
| US-A- 5 770 653 | US-A- 5 777 065 |

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

(52) Cooperative Patent Classification (CPC): (Cont.)

C-Sets
**C08K 3/26, C08L 67/02;**
**C08K 5/07, C08L 67/02;**
**C08L 67/02, C08K 3/013, C08K 5/07, C08L 67/04**

## Description

TECHNICAL FIELD

The present application belongs to the technical field of polymer materials, and specifically relates to a PBAT resin composition and a preparation method therefor and use thereof.

BACKGROUND

Poly(butylene adipate-co-terephthalate) (PBAT resin) is a copolymer of butylene adipate and butylene terephthalate, possessing the characteristics of both polybutylene adipate (PBA) and polybutylene terephthalate (PBT), with good ductility and elongation at break and also good heat resistance and impact properties; in addition, it also has excellent biodegradability, and it is expected to become an alternative material to conventional plastics such as polyethylene, polypropylene, and polyvinyl chloride, showing a promising application prospect.

PBAT resin has a high melting point and good processability, and can be processed by a variety of moulding methods such as blown film, injection moulding, blow moulding, etc., and has high application values in a variety of fields such as packaging materials, biomedical materials, and agricultural materials. Due to the wide applications and high market demands of PBAT resins, it currently has been research hotspots to improve the quality and optimize the properties of PBAT resins.

PBAT resins are usually prepared by the technical route of esterification-polycondensation. For example, CN101864068A discloses a preparation method for butylene terephthalate/butylene adipate co-polyester, wherein a combination of titanium compound and antimony compound is used as a composite catalyst, terephthalic acid, adipic acid, and 1,4-butanediol are subjected to an esterification reaction at atmospheric pressure and at a temperature of 150-220°C, and then the system is depressurized to a high vacuum of 10-150 Pa and controlled at a final reaction temperature of 265-280°C for a polycondensation reaction to obtain the poly(butylene terephthalate/butylene adipate) co-polyester product with an intrinsic viscosity of 0.90-1.32 dL/g. The preparation method has a short reaction period, but has a latent problem of environmental pollution due to the use of heavy-metal antimony compound as a catalyst, and the prepared PBAT resin has a darker color and poor appearance, which is not conducive to later application.

CN113248695A discloses a PBAT polymer and a continuous preparation method therefor, comprising the following steps: pulping, esterification 1, esterification 2, pre-polycondensation, and final polycondensation; the method employs a short-flow continuous polymerization device for continuous polymerization, and adds a functional mother liquor on-line to carry out the reaction, and the obtained PBAT polymer can be directly blown-moulded to prepare an anti-adhesive degradable PBAT film. CN113278138A discloses a PBAT polymer and a preparation method therefor, specifically comprising: mixing terephthalic acid, adipic acid, butylene glycol, a heat stabilizer, and a catalyst in a certain order, and then sequentially subjecting the mixture to pulping, a first esterification, a second esterification, a pre-condensation reaction, a final condensation reaction, and an on-line extrusion and chain extending reaction, to obtain the PBAT polymer; the PBAT polymer has an intrinsic viscosity number of 1.30-1.35 dL/g and carboxyl groups of 30-35 mol/t, but the b value of hue is between 10-12, and the color is darker. CN 105 585 827 A, claim 1 discloses a biodegradable polyester composition characterized by comprising 60 to 100 parts of a biodegradable aliphatic-aromatic polyester; 0 to 40 parts of polylactic acid; 0 to 35 parts of an organic filler and/or an inorganic filler; 0 to 1 part of a copolymer containing an epoxy group and based on styrene, acrylate and/or methacrylate; wherein, based on the total weight of the biodegradable polyester composition, a cyclopentanone in an amount from 0.5 ppm to 85 ppm is present.

Overall, the current PBAT generally suffers from poor batch-to-batch stability, especially the color and lustre instability of the appearance. The commonly used titanium-based catalysts lead to low gloss and yellowing of the products; moreover, the preparation process is accompanied by unavoidable side reactions, which lead to yellowing, reddish or purplish colors of the products, greatly affecting the scope of the downstream applications of the products.

Therefore, it is an urgent problem to be solved in the field to develop a PBAT resin which has good mechanical properties, excellent stability of hue and color and lustre at the same time.

SUMMARY

The present application provides a PBAT resin composition and a preparation method therefor and use thereof. By controlling the mass content of cyclopentylidene-conjugated structural compounds in the PBAT resin composition, the PBAT resin composition has an excellent color value and color and lustre stability, and the PBAT resin composition fully satisfies the performance requirements in processing and moulding technologies such as the blown-film process, and meanwhile, the obtained blown film has low haze and good transmittance and is comprehensively improved in the appearance and mechanical properties.

In a first aspect, the present application provides a PBAT resin composition, and the PBAT resin composition

comprises a PBAT resin and a cyclopentylidene conjugated structural compound; the PBAT resin composition contains the cyclopentylidene conjugated structural compound by a mass content of 0.05 ppm-100 ppm; the cyclopentylidene conjugated structural compound comprises 2-cyclopentylidenecyclopentanone and/or 2,5-dicyclopentylidenecyclopentanone.

In the present application, the 2-cyclopentylidenecyclopentanone has a structural formula of

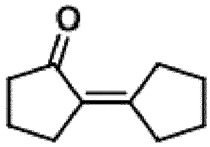

,

and the 2,5-dicyclopentylidenecyclopentanone has a structural formula of

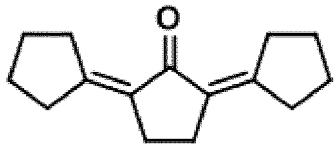

In the present application, the ppm represents parts per million, i.e., 1 ppm represents one part per million; and the ppm mentioned hereinafter has the same meaning.

In the present application, the PBAT resin composition contains the cyclopentylidene conjugated structural compound by a mass content of 0.05 ppm-100 ppm, that is, based on the total mass of the PBAT resin composition being 100%, a mass of the cyclopentylidene conjugated structural compound is 0.05 ppm-100 ppm, which may be, for example, 0.1 ppm, 0.5 ppm, 1 ppm , 5 ppm, 10 ppm, 20 ppm, 30 ppm, 40 ppm, 50 ppm, 60 ppm, 70 ppm, 80 ppm, or 90 ppm, as well as specific point values between the above point values; for space limitation and conciseness reason, the specific point values included in the range will not be exhaustively enumerated in the present application; the mass is preferably 0.1 ppm-80 ppm, and further preferably 0.5 ppm-80 ppm.

For the PBAT resin composition provided in the present application, by controlling the mass content of cyclopentylidene conjugated structural compound at 0.05 ppm-100 ppm, the PBAT resin composition has a higher molecular weight and better mechanical properties and at the same time a low color value and excellent color and lustre stability; the PBAT resin composition has an excellent hue and fully satisfies the requirements in processing and moulding technologies such as the blown-film process, and meanwhile, the obtained blown film has low haze and good transmittance and is comprehensively improved in the appearance and mechanical properties. If the mass content of cyclopentylidene conjugated structural compound in the PBAT resin composition is overly high, the product will obviously show red color, the hue will be inferior, and additionally, the obtained blown film will have high haze and poor transmittance; if the mass content of cyclopentylidene conjugated structural compound in the PBAT resin composition is overly low, the product will have inferior mechanical properties and processability and be unstable during the blown-film process, and the obtained blown film will have high haze and poor transmittance.

Preferably, the PBAT resin has a weight average molecular weight of 70000-200000 g/mol, which may be, for example, 80000 g/mol, 90000 g/mol, 100000 g/mol, 110000 g/mol, 120000 g/mol, 130000 g/mol, 140000 g/mol, 150000 g/mol, 160000 g/mol, 170000 g/mol, 180000 g/mol, or 190000 g/mol, as well as specific point values between the above point values; for space limitation and conciseness reason, the specific point values included in the range will not be exhaustively enumerated in the present application.

Preferably, the PBAT resin has a melt mass-flow rate of 1-10 g/10 min at 190°C and 1.25 kg, which may be, for example, 1.5 g/10 min, 2 g/10 min, 3 g/10 min, 4 g/10 min, 5 g/10 min, 6 g/10 min, 7 g/10 min, 8 g/10 min, or 9 g/ 10 min, as well as specific point values between the above point values; for space limitation and conciseness reason, the specific point values included in the range will not be exhaustively enumerated in the present application.

Preferably, the cyclopentylidene conjugated structural compound comprises a combination of 2-cyclopentylidenecyclopentanone and 2,5-dicyclopentylidenecyclopentanone.

Preferably, the PBAT resin composition contains the cyclopentylidene conjugated structural compound by a mass content of 0.1 ppm-80 ppm.

Preferably, the PBAT resin composition contains 2-cyclopentylidenecyclopentanone by a mass content of 0.05-60 ppm, which may be, for example, 0.1 ppm, 0.5 ppm, 1 ppm, 5 ppm, 10 ppm, 20 ppm, 30 ppm, 40 ppm, or 50 ppm, as well as specific point values between the above point values; for space limitation and conciseness reason, the specific point values included in the range will not be exhaustively enumerated in the present application.

Preferably, the PBAT resin composition contains 2,5-dicyclopentylidenecyclopentanone by a mass content of

0.05-30 ppm, which may be, for example, 0.1 ppm, 0.5 ppm, 1 ppm, 3 ppm, 5 ppm, 8 ppm, 10 ppm, 12 ppm, 15 ppm, 18 ppm, 20 ppm, 22 ppm, 25 ppm, or 28 ppm, as well as specific point values between the above point values; for space limitation and conciseness reason, the specific point values included in the range will not be exhaustively enumerated in the present application.

Exemplarily, the mass content of 2-cyclopentylidenecyclopentanone in the PBAT resin composition is determined and calculated by the following method: specifically, the PBAT resin composition is mixed with a solvent to form a solution to be tested; the solution to be tested is tested by gas chromatography-mass spectrometry (GC-MS) to give the peak area of 2-cyclopentylidenecyclopentanone, and based on the peak area of 2-cyclopentylidenecyclopentanone in the solution to be tested and the standard curve of 2-cyclopentylidenecyclopentanone, the content of 2-cyclopentylidenecyclopentanone in the PBAT resin composition can be calculated; the standard curve is constructed by a 2-cyclopentylidenecyclopentanone/n-hexylbenzene solution; the content of 2-cyclopentylidenecyclopentanone is calculated by the internal standard method.

Exemplarily, the mass content of 2,5-dicyclopentylidenecyclopentanone in the PBAT resin composition is determined and calculated by the following method: specifically, the PBAT resin composition is mixed with a solvent to form a solution to be tested; the solution to be tested is tested by gas chromatography-mass spectrometry (GC-MS) to give the peak area of 2,5-dicyclopentylidenecyclopentanone, and based on the peak area of 2,5-dicyclopentylidenecyclopentanone in the solution to be tested and the standard curve of 2,5-dicyclopentylidenecyclopentanone, the content of 2,5-dicyclopentylidenecyclopentanone in the PBAT resin composition can be calculated; the standard curve is constructed by a 2,5-dicyclopentylidenecyclopentanone/n-hexylbenzene solution; the content of 2,5-dicyclopentylidenecyclopentanone is calculated by the internal standard method.

Preferably, the solution to be tested is prepared as follows: the PBAT resin composition (for example, 0.2 g) is added to a 4 mL glass vial, and added with chloroform to dissolve; after the PBAT resin composition is completely dissolved, a 10 mg/kg n-hexylbenzene solution is added and mixed uniformly to give the solution to be tested.

In a second aspect, the present application provides a preparation method for the PBAT resin composition as described in the first aspect, and the preparation method comprises: mixing the PBAT resin and the cyclopentylidene conjugated structural compound uniformly to obtain the PBAT resin composition.

In a third aspect, the present application provides another preparation method for the PBAT resin composition as described in the first aspect, and the preparation method comprises the following steps: subjecting adipic acid, terephthalic acid, and 1,4-butanediol to an esterification reaction to obtain an oligomer; wherein subjecting the oligomer to a polycondensation reaction to obtain the PBAT resin composition; the esterification reaction has an esterification rate of more than or equal to 96%, and the polycondensation reaction is performed at a temperature of 240-250°C.

The PBAT resins prepared in the prior art commonly have problems of dark color, poor hue , and unstable color and lustre, which thereby affect the downstream application of the PBAT resins. It is found by studying in the present application that the synthesis process of PBAT can be divided into two stages: esterification and polycondensation; the esterification process mainly includes a dehydration reaction occurring among adipic acid, terephthalic acid, and 1,4-butanediol, the esterification is performed at a lower temperature and usually at 180-230°C under atmospheric pressure, and the final esterification rate is around 85-93%; the polycondensation reaction is mainly transesterification occurring among oligomers, and the removal of 1,4-butanediol requires a higher temperature and vacuum; therefore, in the polycondensation stage, the adipic acid which is not fully reacted in the esterification process will be decarboxylated and dehydrated under the action of high temperature and catalyst, or even suffer self-polymerization further and produce 2-cyclopentylidenecyclopentanone and/or 2,5-dicyclopentylidenecyclopentanone, thereby seriously affecting the hue and quality of the product.

As a preferred technical solution of the present application, the method of controlling the esterification rate (the esterification rate of the esterification reaction is more than or equal to 96%) and regulating the temperature of the polycondensation reaction (240-250°C) is adopted in the preparation method, and thus the adipic acid is fully reacted and effectively suppresses the side reaction of adipic acid; accordingly, the content of the chromophore-containing cyclopentylidene conjugated structural compound (2-cyclopentylidenecyclopentanone and/or 2,5-dicyclopentylidene cyclopentanone) in the product is controlled to bring the result that the PBAT resin composition contains the cyclopentylidene conjugated structural compound by a mass content of 0.05 ppm-100 ppm, which endows the resin composition with a high molecular weight and good mechanical properties and at the same time an excellent hue and color and lustre stability, and meanwhile, the processability is good and the obtained blown film has low haze and excellent transmittance.

In the preparation method provided by the present application, the esterification reaction has an esterification rate of more than or equal to 96%, which may be, for example, 96.2%, 96.5%, 96.8%, 97%, 97.2%, 97.5%, 97.8%, 98%, 98.2%, 98.5%, 98.8%, 99%, or 99.2%.

The polycondensation reaction is performed at a temperature of 240-250°C, which may be, for example, 241°C, 242°C, 243°C, 244°C, 245°C, 246°C, 247°C, 248°C, or 249°C, as well as specific point values between the above point values; for space limitation and conciseness reason, the specific point values included in the range will not be exhaustively enumerated in the present application.

Preferably, a molar ratio of adipic acid to terephthalic acid is (0.1-9.0): 1, which may be, for example, 0.2: 1, 0.5: 1, 0.8: 1, 1.0: 1, 1.5: 1, 2.0: 1, 2.5: 1, 3.0: 1, 4.0: 1, 5.0: 1, 6.0: 1, 7.0: 1, or 8.0: 1.

Preferably, a ratio of a total molar amount of adipic acid and terephthalic acid to a molar amount of 1,4-butanediol is 1: (1.1-2.0), which may be, for example, 1: 1.15, 1: 1.2, 1: 1.25, 1: 1.3, 1: 1.35, 1: 1.4, 1: 1.45, 1: 1.5, 1: 1.55, 1: 1.6, 1: 1.65, 1: 1.7 , 1: 1.75, 1: 1.8, 1: 1.85, 1: 1.9, or 1: 1.95.

Preferably, the esterification reaction is performed in the presence of a catalyst.

Preferably, the catalyst is a titanium-based catalyst.

Preferably, the catalyst is selected from any one or a combination of at least two of tetra-n-butyl titanate, tetraisopropyl titanate, tetraisobutyl titanate, tetraisooctyl titanate, titanium acetate, titanium lactate, titanium tartrate, titanium citrate, titanium glycolate, titanium propanediol, or titanium butanediol.

Preferably, based on the total mass of the adipic acid, terephthalic acid, and 1,4-butanediol is 100%, a mass of titanium in the catalyst is 50 ppm-150 ppm, which may be, for example, 55 ppm, 60 ppm, 65 ppm, 70 ppm, 75 ppm, 80 ppm, 85 ppm, 90 ppm, 95 ppm, 100 ppm, 105 ppm, 110 ppm, 115 ppm, 120 ppm, 125 ppm, 130 ppm, 135 ppm, or 140 ppm, as well as specific point values between the above point values; for space limitation and conciseness reason, the specific point values included in the range will not be exhaustively enumerated in the present application.

Preferably, the esterification reaction is performed at a temperature of 210-240°C, which may be, for example, 212°C, 215°C, 218°C, 220°C, 222°C, 225°C, 228°C, 230°C, 232°C, 235°C, or 238°C, as well as specific point values between the above point values; for space limitation and conciseness reason, the specific point values included in the range will not be exhaustively enumerated in the present application.

Preferably, the esterification reaction is performed for a period of 1.5-4 h, which may be, for example, 1.75 h, 2 h, 2.25 h, 2.5 h, 2.75 h, 3 h, 3.25 h, 3.5 h, or 3.75 h, as well as specific point values between the above point values; for space limitation and conciseness reason, the specific point values included in the range will not be exhaustively enumerated in the present application.

Preferably, the esterification reaction is performed in a protective atmosphere.

Preferably, the protective atmosphere is a nitrogen atmosphere and/or an argon atmosphere.

Preferably, the esterification reaction is performed at atmospheric pressure.

Preferably, the polycondensation reaction is performed at a pressure of 5-100 Pa, which may be, for example, 10 Pa, 20 Pa, 30 Pa, 40 Pa, 50 Pa, 60 Pa, 70 Pa, 80 Pa, or 90 Pa, as well as specific point values between the above point values; for space limitation and conciseness reason, the specific point values included in the range will not be exhaustively enumerated in the present application.

Preferably, after the esterification reaction is completed, the reaction system is depressurized to 5-100 Pa within 30 min, and for example, the depressurizing period can be 28 min, 25 min, 22 min, 20 min, 18 min, 15 min, 12 min, 10 min, 8 min, or 5 min.

Preferably, the polycondensation reaction is performed for a period of 2-4 h, which may be, for example, 2.25 h, 2.5 h, 2.75 h, 3 h, 3.25 h, 3.5 h, or 3.75 h, as well as specific point values between the above point values; for space limitation and conciseness reason, the specific point values included in the range will not be exhaustively enumerated in the present application.

Preferably, after the polycondensation reaction is completed, the reaction system is charged with a protective gas (for example, nitrogen and/or argon) to restore atmospheric pressure to obtain a PBAT melt; the PBAT melt is subjected to extrusion and granulation to obtain the PBAT resin composition.

Preferably, the preparation method further comprises steps of extrusion and granulation after the polycondensation reaction.

Preferably, the extrusion is performed in a protective atmosphere.

Preferably, the preparation method specifically comprises the following steps:

(1) subjecting adipic acid, terephthalic acid, and 1,4-butanediol to an esterification reaction in the presence of a titanium-based catalyst to obtain an oligomer; the esterification reaction is performed in a protective atmosphere at a temperature of 210-240°C for a period of 1.5-4 h; and the esterification reaction has an esterification rate of more than or equal to 96%; and

(2) after the esterification reaction in step (1) is completed, depressurizing the system to 5-100 Pa in 30 min and performing a polycondensation reaction, wherein the polycondensation reaction is performed at a temperature of 240-250°C for a period of 2-4 h, to obtain the PBAT resin composition.

In a fourth aspect, the present application provides a resin composition, and the resin composition comprises the following components in parts by weight:

| | |
|---|---|
| PBAT resin composition | 60-100 parts; |
| polylactic acid | 0-40 parts; and |
| filler | 0-35 parts; |

wherein the PBAT resin composition is the PBAT resin composition as described in the first aspect; and

the polylactic acid and the filler are required not to be 0 parts by weight concurrently.

In the resin composition provided by the present application, the PBAT resin composition is 60-100 parts, which may be, for example, 65 parts, 70 parts, 75 parts, 80 parts, 85 parts, 90 parts, or 95 parts, as well as specific point values between the above point values; for space limitation and conciseness reason, the specific point values included in the range will not be exhaustively enumerated in the present application.

The polylactic acid is 0-40 parts, which may be, for example, 1 part, 5 parts, 10 parts, 15 parts, 20 parts, 25 parts, 30 parts, or 35 parts, as well as specific point values between the above point values; for space limitation and conciseness reason, the specific point values included in the range will not be exhaustively enumerated in the present application.

The filler is 0-35 parts, which may be, for example, 1 part, 3 parts, 5 parts, 10 parts, 15 parts, 20 parts, 25 parts, 30 parts, or 32 parts, as well as specific point values between the above point values; for space limitation and conciseness reason, the specific point values included in the range will not be exhaustively enumerated in the present application.

Preferably, the polylactic acid has a melt mass-flow rate of 1-10 g/10 min at 190°C and 2.16 kg, which may be, for example, 1.5 g/10 min, 2 g/10 min, 3 g/10 min, 4 g/10 min, 5 g/10 min, 6 g/10 min, 7 g/10 min, 8 g/10 min, or 9 g/10 min, as well as specific point values between the above point values; for space limitation and conciseness reason, the specific point values included in the range will not be exhaustively enumerated in the present application.

Preferably, the filler is an inorganic filler and/or an organic filler.

Preferably, the inorganic filler comprises any one or a combination of at least two of talc, montmorillonite, kaolin, chalk, calcium carbonate, graphite, gypsum, conductive carbon black, calcium chloride, iron oxide, dolomite, silicon dioxide, wollastonite, titanium dioxide, silicate, mica, glass fibres, or mineral fibres.

Preferably, the organic filler comprises any one or a combination of at least two of starch, natural fibres, or wood flour.

Preferably, the starch comprises any one or a combination of at least two of natural starch, plasticized starch, or modified starch.

Preferably, the resin composition further comprises an additive in 0.01-5 parts by weight, and for example, the additive may be 0.03 parts, 0.05 parts, 0.08 parts, 0.1 parts, 0.3 parts, 0.5 parts, 0.8 parts, 1 part, 1.5 parts, 2 parts, 2.5 parts, 3 parts, 3.5 parts, 4 parts, or 4.5 parts, as well as specific point values between the above point values; for space limitation and conciseness reason, the specific point values included in the range will not be exhaustively enumerated in the present application.

Preferably, the additive comprises a lubricant, an antistatic agent, and an antioxidant, which exemplarily includes but is not limited to: calcium stearate, erucamide, etc.

The PBAT resin composition described in the present application and/or a resin composition comprising the same may be used in the production of shopping bags, compost bags, mulch films, protective cover films, silo films, film tapes, fabrics, non-fabrics, textiles, fishing nets, load bearing bags, or rubbish bags,.

Compared with the prior art, the present application has the beneficial effects below.

(1) In the PBAT resin composition provided by the present application, the mass content of the cyclopentylidene conjugated structural compound is 0.05 ppm-100 ppm, which has the resin composition with a high molecular weight and good mechanical properties and at the same time low color value and excellent color and lustre stability; the a value is less than or equal to 0.9, the b value is less than or equal to 6.8, the L value is 82-85.6, and the variation of the a value after high temperature treatment is less than or equal to 0.03; the PBAT resin composition has an excellent hue and good color stability, and fully satisfies the requirements in processing and moulding technologies such as the blown-film process, and meanwhile, the obtained blown film has a haze less than 30% and is more clear and transparent, its tear resistance is more than 1320 MPa, and the appearance and mechanical properties of the product are comprehensively improved.

(2) The resin composition comprising the PBAT resin composition has good mechanical properties and mechanics properties; for the resin film prepared by combining the PBAT resin composition with polylactic acid and a filler, the tensile strength is 42-53 MPa, the elongation at break is more than 660%, the puncture work/thickness reaches 0.081-0.091 kN/mm, the gloss is more than or equal to 80%, and the resin film has excellent performance in the appearance, mechanical strength and toughness and can fully meet the application requirements in a variety of film

bag products.

DETAILED DESCRIPTION

The technical solutions of the present application are further described below via specific embodiments. It should be clear to those skilled in the art that the examples are merely used for a better understanding of the present application and should not be regarded as a specific limitation to the present application.

Unless otherwise specified, the equipment and methods used in the present application are those commonly used in the art, as follows:

1. Weight average molecular weight and number average molecular weight: tested using gel permeation chromatography (GPC) from Waters.

2. Melt mass-flow rate (MFR): the melt mass-flow rate MFR of the PBAT resin composition is determined at 190°C and 1.25 kg, and the melt mass-flow rate MFR of the polylactic acid is determined at 190°C and 2.16 kg.

3. Hue: including the L value, a value, and b value; using the Color35 automatic colorimeter from BYK Gardner for automatic determination; the L value represents glossiness, the a value represents the degrees of red and green, and the b value represents the degrees of yellow and blue.

4. Color stability: the PBAT resin composition to be tested is divided into two parts, wherein one part is tested for the a value in accordance with the above test method of hue, and the other part is uniformly arranged on a stainless steel tray by an amount of 20 g per 100 square centimeters, and the stainless steel tray is placed into an oven at 200°C and kept 10 cm or more from the heating surface; this part of PBAT resin composition is kept at 200°C for 1 h, then granulated and determined for the a value in accordance with the above test method of hue, and the result is recorded as a' value; a smaller difference between the a' value and the a value indicates a better color stability.

5. Esterification rate: determined by the ratio of a water content of the esterified fraction to a theoretical water content, and calculated according to the following equation:

$$\text{esterification rate} = \frac{\text{water content of the esterified fraction}}{\text{theoretical water content}} \times 100\%.$$

6. Mass content of cyclopentylidene conjugated structural compound

6.1. The mass content of 2-cyclopentylidenecyclopentanone is determined by gas chromatography-mass spectrometry (GC-MS) with a capillary column, and the specific test method is as follows:

(1) Device:

Gas chromatography-quadrupole mass spectrometer-Agilent 7890A-5975C equipped with a mass analyzer detector (Agilent Technologies).

Autosampler-G4513A (Agilent Technologies).

GC Control Station-Agilent Open LAB (Agilent Technologies).

Capillary column-J&W Scientfic DB-530 m × 0.32 I.D. which has a 0.25 μm membrane (Agilent Technologies part number 19091J-413).

Injector-1 μL splitless injector.

(2) Standard substance test:

A. The 0.1±0.01 g of n-hexylbenzene and 2-cyclopentylidenecyclopentanone standard substance are weighed in a 20 mL glass vial, and added with 10.0 g of dehydrated acetonitrile to dissolve to obtain a solution containing 1% standard substance;

B. The solution prepared in step A is transferred by 0.1±0.01 g into a 20 mL glass vial, and added with 9.9 g of acetonitrile to dilute to obtain a solution containing 100 mg/kg standard substance;

C. The solution prepared in step B is transferred by 0.1±0.01 g into a 20 mL glass vial, and added with 9.9 g of acetonitrile to dilute to obtain a solution containing 1 mg/kg standard substance;

D. The solution prepared in step C and acetonitrile (as a blank control) are added into two 2 mL glass vials until full, respectively, according to the following order: a. Blank; b. 1 mg/kg standard substance; and

E. Each glass vial is capped tightly with a septum cap and loaded into the autosampler according to the above order, and the GC-MS analysis procedure is started.

(3) Sample testing procedure:

A. The PBAT resin composition to be tested is weighed for 0.2 g in a 4 mL glass vial, added with 2.0 g of trichloromethane and subjected to ultraphonic treatment until completely dissolved;

B. N-hexylbenzene is weighed for 0.1±0.01 g in a 20 mL glass vial and added with 10.0 g of dehydrated acetonitrile to dissolve;

C. The solution prepared in step B is transferred by 0.1±0.01 g into a 20 mL glass vial, and added with 9.9 g of dehydrated acetonitrile to dilute to obtain a solution containing 100 mg/kg n-hexylbenzene;

D. The solution prepared in step C is transferred by 1±0.01 g into a 20 mL glass vial, and added with 9.0 g of dehydrated acetonitrile to dilute to obtain a solution containing 10 mg/kg n-hexylbenzene;

E. The PBAT solution is weighed for 0.1 g in a 4 mL glass vial, added with 0.1 g of N,N-dimethylformamide (DMF) and dispersed uniformly by shaken;

F. A acetonitrile solution of n-hexylbenzene is dropwise added by 2.8 g, and the system is shaken constantly during the addition to avoid precipitation agglomeration during the depositing process;

G. After complete deposition, the precipitate and supernatant are separated by centrifugation via a centrifuge with a rotation speed set at 8000 for 10 min; and

H. The supernatant is taken in a 2 mL vial, the vial is loaded into the autosampler, and the GC-MS analysis procedure is started.

(4) GC operating conditions:
The inlet temperature is 280°C, the injection volume is 1 μL, the purge gas flow is 30 mL/min helium, the column gas flow is 1.5-3 mL/min helium, the initial temperature is 50°C, the initial time is 2-5 min, the temperature rise rate is 15°C/min, and the final temperature is 300°C.

(5) MS operating conditions:

Scanning mode-SIM mode

2-cyclopentylidenecyclopentanone characteristic ion-target ion 150, characteristic ions 121, 91.

n-hexylbenzene characteristic ion-target ion 91, characteristic ions 133, 162.

The scanning time is 8-15 min; the ion source is an EI source; the voltage is 70 eV; the transfer line temperature is 280°C; the ion source temperature is 230°C; and the quadrupole temperature is 150°C.

(6) Calculation processing

A. The standard substance of 1 mg/kg is analyzed by GC-MS to obtain the total ion chromatogram (TIC), the target ion 150 of 2-cyclopentylidenecyclopentanone and the target ion 91 of n-hexylbenzene are extracted

ions, and the corresponding ion peak areas are integrated and recorded as A150 standard and A91 standard, respectively, and the concentration ratio A1 and ion peak area ratio B1 of 2-cyclopentylidenecyclopentanone to n-hexylbenzene in the standard substance are calculated;

B. The test samples are analyzed by GC-MS to obtain the total ion chromatogram (TIC), the target ion 150 of 2-cyclopentylidenecyclopentanone and the target ion 91 of n-hexylbenzene are extracted ions, and the corresponding ion peak areas are integrated and recorded as A150 sample and A91 sample, respectively, and the ion peak area ratio A2 of samples and n-hexylbenzene concentration C are calculated; and

C. The content of 2-cyclopentylidenecyclopentanone is calculated by the internal standard method, and content = $A2 \times B1 \times C / A1 \times$ total dilution ratio, in mg/kg.

6.2. The mass content of 2,5-dicyclopentylidenecyclopentanone is determined by GC-MS with a capillary column, and the specific test method is as follows:

(1) Device:

Gas chromatography-quadrupole mass spectrometer-Agilent 7890A-5975C equipped with a mass analyzer detector (Agilent Technologies).

Autosampler-G4513A (Agilent Technologies).

GC Control Station-Agilent Open LAB (Agilent Technologies).

Capillary column-J&W Scientfic DB-530 m $\times$ 0.32 I.D. which has a 0.25 μm membrane (Agilent Technologies part number 19091J-413).

Injector-1 μL splitless injector.

(2) Standard substance test:

A. The 0.1±0.01 g of n-hexylbenzene and 2,5-dicyclopentylidenecyclopentanone standard substance are weighed in a 20 mL glass vial, and added with 10.0 g of dehydrated acetonitrile to dissolve to obtain a solution containing 1% standard substance;

B. The solution prepared in step A is transferred by 0.1±0.01 g into a 20 mL glass vial, and added with 9.9 g of acetonitrile to dilute to obtain a solution containing 100 mg/kg standard substance;

C. The solution prepared in step B is transferred by 0.1±0.01 g into a 20 mL glass vial, and added with 9.9 g of acetonitrile to dilute to obtain a solution containing 1 mg/kg standard substance;

D. The solution prepared in step C and acetonitrile (as a blank control) are added into two 2 mL glass vials until full, respectively, according to the following order: a. Blank; b. 1 mg/kg standard substance; and

E. Each glass vial is capped tightly with a septum cap and loaded into the autosampler according to the above order, and the GC-MS analysis procedure is started.

(3) Sample testing procedure:

A. The PBAT resin composition to be tested is weighed for 0.2 g in a 4 mL glass vial, added with 2.0 g of trichloromethane and subjected to ultraphonic treatment until completely dissolved;

B. N-hexylbenzene is weighed for 0.1±0.01 g in a 20 mL glass vial and added with 10.0 g of dehydrated acetonitrile to dissolve;

C. The solution prepared in step B is transferred by 0.1±0.01 g into a 20 mL glass vial, and added with 9.9 g of dehydrated acetonitrile to dilute to obtain a solution containing 100 mg/kg n-hexylbenzene;

D. The solution prepared in step C is transferred by 1±0.01 g into a 20 mL glass vial, and added with 9.0 g of dehydrated acetonitrile to dilute to obtain a solution containing 10 mg/kg n-hexylbenzene;

E. The PBAT solution is weighed for 0.1 g in a 4 mL glass vial, added with 0.1 g of DMF and dispersed uniformly by shaken;

F. A acetonitrile solution of n-hexylbenzene is dropwise added by 2.8 g, and the system is shaken constantly during the addition to avoid precipitation agglomeration during the depositing process;

G. After complete deposition, the precipitate and supernatant are separated by centrifugation via a centrifuge with a rotation speed set at 8000 for 10 min; and

H. The supernatant is taken in a 2 mL vial, the vial is loaded into the autosampler, and the GC-MS analysis procedure is started.

(4) GC operating conditions:
The inlet temperature is 280°C, the injection volume is 1 μL, the purge gas flow is 30 mL/min helium, the column gas flow is 1.5-3 mL/min helium, the initial temperature is 50°C, the initial time is 2-5 min, the temperature rise rate is 15°C/min, and the final temperature is 300°C.

(5) MS operating conditions:

Scanning mode-SIM mode

2,5-dicyclopentylidenecyclopentanone characteristic ion-target ion 216, characteristic ions 188, 150.

n-hexylbenzene characteristic ion-target ion 91, characteristic ions 133, 162.

The scanning time is 8-20 min; the ion source is an EI source; the voltage is 70 eV; the transfer line temperature is 280°C; the ion source temperature is 230°C; and the quadrupole temperature is 150°C.

(6) Calculation processing

A. The standard substance of 1 mg/kg is analyzed by GC-MS to obtain the total ion chromatogram (TIC), the target ion 16 of 2,5-dicyclopentylidenecyclopentanone and the target ion 91 of n-hexylbenzene are extracted ions, and the corresponding ion peak areas are integrated and recorded as A216 standard and A91 standard, respectively, and the concentration ratio A1 and ion peak area ratio B1 of 2,5-dicyclopentylidenecyclopentanone to n-hexylbenzene in the standard substance are calculated;

B. The test samples are analyzed by GC-MS to obtain the total ion chromatogram (TIC), the target ion 216 of 2,5-dicyclopentylidenecyclopentanone and the target ion 91 of n-hexylbenzene are extracted ions, and the corresponding ion peak areas are integrated and recorded as A216 sample and A91 sample, respectively, and the ion peak area ratio A2 of samples and n-hexylbenzene concentration C are calculated; and

C. The content of 2,5-dicyclopentylidenecyclopentanone is calculated by the internal standard method, and content = A2×B1×C/A1×total dilution ratio, in mg/kg.

7. Haze and tear resistance of the obtained blown film: the PBAT resin composition to be tested is subjected to the blown-film process and the obtained film is tested for haze, and the specific method is as follows:
PBAT resin compositions granules are added to the hopper of a blown film machine; the temperature of the plasticizing screw of the blown film machine is set at 150-180°C, the rotation speed is set at 200 rpm and the feeding rate is set at 3; the film bubble is tracted from the die and passes through the herringbone splint and the top nip roll and reaches the winder, and the cooling air volume of the wind ring is gradually increased to stabilize the film bubble with a width of 25 cm and a thickness of a single layer of about 25 μm.

The luminous transmittance and haze are tested according to the national standard GB/T 2410-2008 using a haze tester (BYK, 4775), and the luminous transmittance, i.e., haze of sample are recorded.
The tear resistance is tested according to the national standard GB/T 16578.2-2009; the sample is cut into

prescriptive sample strips and tested for tear resistance via loading suitable weights on the Tear Tester (TMI, 83-76) from Elmendorf, and the required force to tear the sample is recorded to obtain the tear resistance.

**Example 1**

A PBAT resin composition comprises a PBAT resin and a cyclopentylidene conjugated structural compound (2-cyclopentylidenecyclopentanone and 2,5-dicyclopentylidenecyclopentanone), and is prepared by the following method: 1000 g of terephthalic acid, 1000 g of adipic acid, 1700 g of 1,4-butanediol, and 2.37 g of tetra-n-butyl titanate were weighed out and added to a 5 L reactor, and with stirring, the system was purged with nitrogen for three times, maintained at atmospheric pressure, heated to 220°C and reacted for 90 min, and an esterification rate was 96.2%; after the esterification reaction was completed, the reactor was depressurized to a high vacuum with an absolute pressure of 15 Pa in 30 min, and subjected to a reaction at 250°C for 3 h, then the stirring was stopped, and the reactor was charged with nitrogen to restore atmospheric pressure, so as to obtain a PBAT melt; the PBAT melt was extruded under the protection of nitrogen, cooled to room temperature and then cut into granules to obtain the PBAT resin composition.

**Example 2**

A PBAT resin composition comprises a PBAT resin and a cyclopentylidene conjugated structural compound (2-cyclopentylidenecyclopentanone and 2,5-dicyclopentylidenecyclopentanone), and is prepared by the following method: 990 g of terephthalic acid, 1100 g of adipic acid, 1750 g of 1,4-butanediol, and 2.73 g of tetra-n-butyl titanate were weighed out and added to a 5 L reactor, and with stirring, the system was purged with nitrogen for three times, maintained at atmospheric pressure, heated to 215°C and reacted for 120 min, and an esterification rate was 96.8%; after the esterification reaction was completed, the reactor was depressurized to a high vacuum with an absolute pressure of 25 Pa in 30 min, and subjected to a reaction at 245°C for 3 h, then the stirring was stopped, and the reactor was charged with nitrogen to restore atmospheric pressure, so as to obtain a PBAT melt; the PBAT melt was extruded under the protection of nitrogen, cooled to room temperature and then cut into granules to obtain the PBAT resin composition.

**Example 3**

A PBAT resin composition comprises a PBAT resin and a cyclopentylidene conjugated structural compound (2-cyclopentylidenecyclopentanone and 2,5-dicyclopentylidenecyclopentanone), and is prepared by the following method: 980 g of terephthalic acid, 1250 g of adipic acid, 1680 g of 1,4-butanediol, and 2.68 g of tetra-n-butyl titanate were weighed out and added to a 5 L reactor, and with stirring, the system was purged with nitrogen for three times, maintained at atmospheric pressure, heated to 210°C and reacted for 130 min, and an esterification rate was 97.1%; after the esterification reaction was completed, the reactor was depressurized to a high vacuum with an absolute pressure of 20 Pa in 30 min, and subjected to a reaction at 240°C for 3 h, then the stirring was stopped, and the reactor was charged with nitrogen to restore atmospheric pressure, so as to obtain a PBAT melt; the PBAT melt was extruded under the protection of nitrogen, cooled to room temperature and then cut into granules to obtain the PBAT resin composition.

**Example 4**

A PBAT resin composition comprises a PBAT resin and a cyclopentylidene conjugated structural compound (2-cyclopentylidenecyclopentanone and 2,5-dicyclopentylidenecyclopentanone), and is prepared by the following method: 970 g of terephthalic acid, 1300 g of adipic acid, 1680 g of 1,4-butanediol, and 2.71 g of tetraisopropyl titanate were weighed out and added to a 5 L reactor, and with stirring, the system was purged with nitrogen for three times, maintained at atmospheric pressure, heated to 220°C and reacted for 110 min, and an esterification rate was 97.7%; after the esterification reaction was completed, the reactor was depressurized to a high vacuum with an absolute pressure of 5 Pa in 30 min, and subjected to a reaction at 250°C for 3 h, then the stirring was stopped, and the reactor was charged with nitrogen to restore atmospheric pressure, so as to obtain a PBAT melt; the PBAT melt was extruded under the protection of nitrogen, cooled to room temperature and then cut into granules to obtain the PBAT resin composition.

**Example 5**

A PBAT resin composition comprises a PBAT resin and a cyclopentylidene conjugated structural compound (2-cyclopentylidenecyclopentanone and 2,5-dicyclopentylidenecyclopentanone), and is prepared by the following method: 1050 g of terephthalic acid, 990 g of adipic acid, 1670 g of 1,4-butanediol, and 2.72 g of tetra-n-butyl titanate were weighed out and added to a 5 L reactor, and with stirring, the system was purged with nitrogen for three times, maintained at atmospheric pressure, heated to 230°C and reacted for 100 min, and an esterification rate was 96.4%; after the

esterification reaction was completed, the reactor was depressurized to a high vacuum with an absolute pressure of 5 Pa in 30 min, and subjected to a reaction at 250°C for 3 h, then the stirring was stopped, and the reactor was charged with nitrogen to restore atmospheric pressure, so as to obtain a PBAT melt; the PBAT melt was extruded under the protection of nitrogen, cooled to room temperature and then cut into granules to obtain the PBAT resin composition.

**Example 6**

A PBAT resin composition comprises a PBAT resin and a cyclopentylidene conjugated structural compound (2-cyclopentylidenecyclopentanone and 2,5-dicyclopentylidenecyclopentanone), and is prepared by the following method: 1020 g of terephthalic acid, 1010 g of adipic acid, 1710 g of 1,4-butanediol, and 3.19 g of tetra-n-butyl titanate were weighed out and added to a 5 L reactor, and with stirring, the system was purged with nitrogen for three times, maintained at atmospheric pressure, heated to 230°C and reacted for 125 min, and an esterification rate was 97.0%; after the esterification reaction was completed, the reactor was depressurized to a high vacuum with an absolute pressure of 5 Pa in 30 min, and subjected to a reaction at 250°C for 3 h, then the stirring was stopped, and the reactor was charged with nitrogen to restore atmospheric pressure, so as to obtain a PBAT melt; the PBAT melt was extruded under the protection of nitrogen, cooled to room temperature and then cut into granules to obtain the PBAT resin composition.

**Example 7**

A PBAT resin composition comprises a PBAT resin and a cyclopentylidene conjugated structural compound (2-cyclopentylidenecyclopentanone and 2,5-dicyclopentylidenecyclopentanone), and is prepared by the following method: 975 g of terephthalic acid, 1025 g of adipic acid, 1730 g of 1,4-butanediol, and 2.64 g of tetraisobutyl titanate were weighed out and added to a 5 L reactor, and with stirring, the system was purged with nitrogen for three times, maintained at atmospheric pressure, heated to 215°C and reacted for 130 min, and an esterification rate was 97.4%; after the esterification reaction was completed, the reactor was depressurized to a high vacuum with an absolute pressure of 10 Pa in 30 min, and subjected to a reaction at 247°C for 3 h, then the stirring was stopped, and the reactor was charged with nitrogen to restore atmospheric pressure, so as to obtain a PBAT melt; the PBAT melt was extruded under the protection of nitrogen, cooled to room temperature and then cut into granules to obtain the PBAT resin composition.

**Example 8**

A PBAT resin composition comprises a PBAT resin and a cyclopentylidene conjugated structural compound (2-cyclopentylidenecyclopentanone and 2,5-dicyclopentylidenecyclopentanone), and is prepared by the following method: 1000 g of terephthalic acid, 1020 g of adipic acid, 1710 g of 1,4-butanediol, and 2.8 g of tetra-n-butyl titanate were weighed out and added to a 5 L reactor, and with stirring, the system was purged with nitrogen for three times, maintained at atmospheric pressure, heated to 230°C and reacted for 140 min, and an esterification rate was 98.1%; after the esterification reaction was completed, the reactor was depressurized to a high vacuum with an absolute pressure of 5 Pa in 30 min, and subjected to a reaction at 242°C for 3 h, then the stirring was stopped, and the reactor was charged with nitrogen to restore atmospheric pressure, so as to obtain a PBAT melt; the PBAT melt was extruded under the protection of nitrogen, cooled to room temperature and then cut into granules to obtain the PBAT resin composition.

**Example 9**

A PBAT resin composition comprises a PBAT resin and a cyclopentylidene conjugated structural compound (2-cyclopentylidenecyclopentanone and 2,5-dicyclopentylidenecyclopentanone), and is prepared by the following method: 1030 g of terephthalic acid, 1070 g of adipic acid, 1720 g of 1,4-butanediol, and 1.57 g of tetraisopropyl titanate were weighed out and added to a 5 L reactor, and with stirring, the system was purged with nitrogen for three times, maintained at atmospheric pressure, heated to 240°C and reacted for 90 min, and an esterification rate was 97.8%; after the esterification reaction was completed, the reactor was depressurized to a high vacuum with an absolute pressure of 5 Pa in 30 min, and subjected to a reaction at 250°C for 3 h, then the stirring was stopped, and the reactor was charged with nitrogen to restore atmospheric pressure, so as to obtain a PBAT melt; the PBAT melt was extruded under the protection of nitrogen, cooled to room temperature and then cut into granules to obtain the PBAT resin composition.

**Example 10**

A PBAT resin composition comprises a PBAT resin and a cyclopentylidene conjugated structural compound (2-cyclopentylidenecyclopentanone and 2,5-dicyclopentylidenecyclopentanone), and is prepared by the following method: 1000 g of terephthalic acid, 1000 g of adipic acid, 1700 g of 1,4-butanediol, and 3.37 g of tetraisobutyl titanate were

weighed out and added to a 5 L reactor, and with stirring, the system was purged with nitrogen for three times, maintained at atmospheric pressure, heated to 240°C and reacted for 120 min, and an esterification rate was 98.6%; after the esterification reaction was completed, the reactor was depressurized to a high vacuum with an absolute pressure of 5 Pa in 30 min, and subjected to a reaction at 250°C for 3 h, then the stirring was stopped, and the reactor was charged with nitrogen to restore atmospheric pressure, so as to obtain a PBAT melt; the PBAT melt was extruded under the protection of nitrogen, cooled to room temperature and then cut into granules to obtain the PBAT resin composition.

**Example 11**

A PBAT resin composition comprises a PBAT resin and a cyclopentylidene conjugated structural compound (2-cyclopentylidenecyclopentanone and 2,5-dicyclopentylidenecyclopentanone), and is prepared by the following method: 1000 g of terephthalic acid, 1000 g of adipic acid, 1700 g of 1,4-butanediol, and 2.37 g of tetra-n-butyl titanate were weighed out and added to a 5 L reactor, and with stirring, the system was purged with nitrogen for three times, maintained at atmospheric pressure, heated to 240°C and reacted for 180 min, and an esterification rate was 99.1%; after the esterification reaction was completed, the reactor was depressurized to a high vacuum with an absolute pressure of 5 Pa in 30 min, and subjected to a reaction at 250°C for 3 h, then the stirring was stopped, and the reactor was charged with nitrogen to restore atmospheric pressure, so as to obtain a PBAT melt; the PBAT melt was extruded under the protection of nitrogen, cooled to room temperature and then cut into granules to obtain the PBAT resin composition.

**Example 12**

A PBAT resin composition comprises a PBAT resin and a cyclopentylidene conjugated structural compound (2-cyclopentylidenecyclopentanone and 2,5-dicyclopentylidenecyclopentanone), and is prepared by the following method: 1000 g of terephthalic acid, 1000 g of adipic acid, 1700 g of 1,4-butanediol, and 2.65 g of tetra-n-butyl titanate were weighed out and added to a 5 L reactor, and with stirring, the system was purged with nitrogen for three times, maintained at atmospheric pressure, heated to 240°C and reacted for 240 min, and an esterification rate was 99.2%; after the esterification reaction was completed, the reactor was depressurized to a high vacuum with an absolute pressure of 5 Pa in 30 min, and subjected to a reaction at 250°C for 3 h, then the stirring was stopped, and the reactor was charged with nitrogen to restore atmospheric pressure, so as to obtain a PBAT melt; the PBAT melt was extruded under the protection of nitrogen, cooled to room temperature and then cut into granules to obtain the PBAT resin composition.

**Example 13**

A PBAT resin composition comprises a PBAT resin and a cyclopentylidene conjugated structural compound (2-cyclopentylidenecyclopentanone and 2,5-dicyclopentylidenecyclopentanone), and is prepared by the following method: 1000 g of terephthalic acid, 1000 g of adipic acid, 1700 g of 1,4-butanediol, and 2.81 g of tetra-n-butyl titanate were weighed out and added to a 5 L reactor, and with stirring, the system was purged with nitrogen for three times, maintained at atmospheric pressure, heated to 240°C and reacted for 240 min, and an esterification rate was 99.0%; after the esterification reaction was completed, the system was heated to 245°C, the reactor was depressurized to a high vacuum with an absolute pressure of 5 Pa in 30 min, and subjected to a reaction at 245°C for 3 h, then the stirring was stopped, and the reactor was charged with nitrogen to restore atmospheric pressure, so as to obtain a PBAT melt; the PBAT melt was extruded under the protection of nitrogen, cooled to room temperature and then cut into granules to obtain the PBAT resin composition.

**Example 14**

A PBAT resin composition comprises a PBAT resin and a cyclopentylidene conjugated structural compound (2-cyclopentylidenecyclopentanone and 2,5-dicyclopentylidenecyclopentanone), and is prepared by the following method: 1000 g of terephthalic acid, 1000 g of adipic acid, 1700 g of 1,4-butanediol, and 1.87 g of tetra-n-butyl titanate were weighed out and added to a 5 L reactor, and with stirring, the system was purged with nitrogen for three times, maintained at atmospheric pressure, heated to 240°C and reacted for 240 min, and an esterification rate was 98.9%; after the esterification reaction was completed, the system was heated to 245°C, the reactor was depressurized to a high vacuum with an absolute pressure of 5 Pa in 30 min, and subjected to a reaction at 240°C for 3 h, then the stirring was stopped, and the reactor was charged with nitrogen to restore atmospheric pressure, so as to obtain a PBAT melt; the PBAT melt was extruded under the protection of nitrogen, cooled to room temperature and then cut into granules to obtain the PBAT resin composition.

**Comparative Example 1**

A PBAT resin composition is prepared by the following method:
1000 g of terephthalic acid, 1000 g of adipic acid, 1700 g of 1,4-butanediol, and 2.37 g of tetra-n-butyl titanate were weighed out and added to a 5 L reactor, and with stirring, the system was purged with nitrogen for three times, maintained at atmospheric pressure, heated to 220°C and reacted for 60 min, and an esterification rate was 93.5%; after the esterification reaction was completed, the reactor was depressurized to a high vacuum with an absolute pressure of 5 Pa in 30 min, and subjected to a reaction at 260°C for 3 h, then the stirring was stopped, and the reactor was charged with nitrogen to restore atmospheric pressure, so as to obtain a PBAT melt; the PBAT melt was extruded under the protection of nitrogen, cooled to room temperature and then cut into granules to obtain the PBAT resin composition.

**Comparative Example 2**

A PBAT resin composition is prepared by the following method:
1000 g of terephthalic acid, 1000 g of adipic acid, 1700 g of 1,4-butanediol, and 2.37 g of tetra-n-butyl titanate were weighed out and added to a 5 L reactor, and with stirring, the system was purged with nitrogen for three times, maintained at atmospheric pressure, heated to 240°C and reacted for 480 min, and an esterification rate was 99.7%; after the esterification reaction was completed, the reactor was depressurized a high vacuum with to an absolute pressure of 5 Pa in 30 min, and subjected to a reaction at 240°C for 3 h, then the stirring was stopped, and the reactor was charged with nitrogen to restore atmospheric pressure, so as to obtain a PBAT melt; the PBAT melt was extruded under the protection of nitrogen, cooled to room temperature and then cut into granules to obtain the PBAT resin composition.
The PBAT resin compositions provided by Examples 1-14 and Comparative Examples 1-2 were tested for the content of cyclopentylidene conjugated structural compound, weight average molecular weight ($M_w$), melt mass-flow rate (MFR), hue, and haze by using the foregoing methods, and the results of the tests are shown in Table 1 and Table 2.

Table 1

| | Content of cyclopentylidene conjugated structural compound (ppm) | Content of 2-cyclopenty lidenecyclop entanone (ppm) | Content of 2,5-dicyclope ntylidenecycl opentanone (ppm) | Esterification rate (%) | $M_w$ (g/mol) | MFR (g/min) |
|---|---|---|---|---|---|---|
| Example 1 | 80 | 56 | 24 | 96.2 | 110000 | 6.8 |
| Example 2 | 66 | 45 | 21 | 96.8 | 123000 | 6.1 |
| Example 3 | 52 | 36 | 16 | 97.1 | 121000 | 6.4 |
| Example 4 | 41 | 27 | 14 | 97.7 | 135000 | 5.4 |
| Example 5 | 71 | 53 | 28 | 96.4 | 128000 | 5.8 |
| Example 6 | 58 | 42 | 16 | 97.0 | 138000 | 5.1 |
| Example 7 | 48 | 27 | 21 | 97.4 | 155000 | 4.1 |
| Example 8 | 31 | 25 | 6 | 98.1 | 159000 | 3.8 |
| Example 9 | 42 | 29 | 13 | 97.8 | 155000 | 4.2 |
| Example 10 | 25 | 17 | 8 | 98.6 | 162000 | 3.2 |
| Example 11 | 12 | 9 | 4 | 99.1 | 168000 | 3.0 |
| Example 12 | 5.2 | 3.9 | 1.3 | 99.2 | 159000 | 3.8 |
| Example 13 | 1.2 | 0.8 | 0.4 | 99.0 | 135000 | 5.3 |
| Example 14 | 0.51 | 0.33 | 0.18 | 98.9 | 112000 | 6.9 |
| Comparative Example 1 | 158 | 102 | 56 | 93.5 | 136000 | 5.1 |
| Comparative Example 2 | 0.02 | 0.016 | 0.004 | 99.7 | 67000 | 15.2 |

Table 2

| | L value | a value | b value | a' value | Haze (%) | Tear resistance (MPa) |
|---|---|---|---|---|---|---|
| Example 1 | 84.0 | 0.89 | 6.2 | 0.92 | 23 | 1530 |
| Example 2 | 83.6 | 0.80 | 6.1 | 0.81 | 27 | 1472 |
| Example 3 | 82.9 | 0.69 | 5.4 | 0.72 | 19 | 1624 |
| Example 4 | 84.2 | 0.51 | 6.1 | 0.52 | 22 | 1467 |
| Example 5 | 83.1 | 0.88 | 5.8 | 0.90 | 26 | 1499 |
| Example 6 | 85.6 | 0.78 | 4.8 | 0.79 | 24 | 1392 |
| Example 7 | 83.2 | 0.66 | 5.9 | 0.68 | 25 | 1643 |
| Example 8 | 82.1 | 0.41 | 6.3 | 0.42 | 20 | 1389 |
| Example 9 | 83.3 | 0.49 | 5.5 | 0.51 | 22 | 1466 |
| Example 10 | 84.1 | 0.23 | 5.2 | 0.25 | 17 | 1527 |
| Example 11 | 82.9 | 0.13 | 6.8 | 0.13 | 16 | 1633 |
| Example 12 | 83.3 | -0.11 | 5.2 | -0.10 | 19 | 1574 |
| Example 13 | 83.5 | -0.45 | 5.4 | -0.44 | 23 | 1489 |
| Example 14 | 84.9 | -0.62 | 4.2 | -0.62 | 15 | 1326 |
| Comparative Example 1 | 81.0 | 1.71 | 6.9 | 2.35 | 57 | 645 |
| Comparative Example 2 | 86.2 | -0.97 | 4.1 | -0.24 | 68 | 702 |

According to Table 1 and Table 2, it can be seen that for the PBAT resin compositions provided by Examples 1-14 of the present application, by controlling the mass content of cyclopentylidene conjugated structural compound at 0.05 ppm-100 ppm, the a value is less than or equal to 0.9, the b value is 4.2-6.8, the L value is 82-85.6, and the variation of the a value after treated at 200°C for 1 h is 0-0.03, indicating that the PBAT resin composition has a good color value and gloss, and meanwhile, the obtained blown film has a haze less than 30% which even reaches as low as 15-27% and has excellent transparency and also high tear resistance reaching 1326-1650 MPa, which is particularly suitable to be used in bags required to possess high transmittance and high strength. However, for the PBAT resin composition provided by Comparative Example 1, the content of cyclopentylidene conjugated structural compound is less than 0.05 ppm; the resin has a good hue, but the molecular weight is low, the MFR is more than 10 g/10 min, the processability is poor, the blown film bubble is unstable, the haze of the film is high, and the tear resistance is poor, which restrict the application of the film in the film bag. For the PBAT resin composition provided by Comparative Example 2, the content of cyclopentylidene conjugated structural compound is higher than 100 ppm; the a value is greater than 1, indicating that the hue of the PBAT resin composition is inferior, and the color is reddish to the naked eye; the haze of the obtained blown film is very high, which affects the transmittance of the film.

**Application Example**

A resin composition comprises the following components in parts by weight:

| | |
|---|---|
| PBAT resin composition | 90 parts; |
| polylactic acid (PLA resin) | 5 parts; |
| starch | 1 part; |
| talc | 0.2 parts; |
| calcium carbonate | 3 parts; |
| calcium stearate | 0.2 parts; and |
| erucamide | 0.6 parts; |

wherein the PBAT resin composition is the PBAT resin compositions provided by Examples 1-14 and Comparative Examples 1-2, respectively; the PLA resin is the product from Total-Corbion Company with product number LX175, the MFR of which is 3.6 g/10 min at 190°C and 2.16 kg.

The resin composition is prepared by the following method: the PBAT resin composition, PLA resin, starch, talc, calcium carbonate, calcium stearate, and erucamide were blended according to the formulation proportions in a blender and then fed into a single-screw extruder, and extruded and granulated at 170°C to obtain the resin composition.

The resin composition provided by the foregoing application example is subjected to performance tests according to the following method:
resin composition granules were fed to the hopper of the blown film machine; the temperature of the plasticizing screw of the blown film machine was set at 150-180°C, the rotation speed was set at 200 rpm and the feeding rate was set at 3; the film bubble was tracted from the die and passed through the herringbone splint and the top nip roll and reached the winder, and the cooling air volume of the wind ring was gradually increased to stabilize the film bubble with a width of 25 cm and a thickness of a single layer of about 25 μm; the obtained resin film was subjected to tests for tensile properties, puncture resistance, and gloss.

(1) Tensile property test: according to the national standard GB/T 1040-2006, the sample was cut into dumbbell-shaped strips (6.1 mm×25 mm) with a cutter, and then the strips were clamped on a single-column tensile tester (Zwick, Z0.5) and subjected to the tensile test using a 200 N pulling force at a tensile speed of 500 mm/min, and the data were transmitted to a computer through a sensor to obtain the tensile strength and elongation at the break.

(2) Puncture resistance test: according to the national standard GB/T 37841-2019, the sample was fixed between two clamping rings, and the puncture needle vertically pierced the centre of the sample at a constant speed of 50 mm/min, and the load was recorded at the moment when the sample was pierced through.

(3) Gloss test: according to the international standard ISO 7668-2018, a 45° glossiness test was performed using a glossiness meter (BYK, 4775), and the gloss of the sample was recorded.

The test results are shown in Table 3:

Table 3

| PBAT resin composition No. | Tensile strength (MPa) | Elongation at break (%) | Puncture work/thickness (kN/mm) | Gloss (%) |
|---|---|---|---|---|
| Example 1 | 42 | 712 | 0.082 | 85 |
| Example 2 | 46 | 685 | 0.091 | 87 |
| Example 3 | 51 | 673 | 0.086 | 80 |
| Example 4 | 47 | 692 | 0.087 | 84 |
| Example 5 | 44 | 675 | 0.084 | 81 |
| Example 6 | 48 | 704 | 0.088 | 86 |
| Example 7 | 50 | 666 | 0.090 | 84 |
| Example 8 | 47 | 681 | 0.088 | 82 |
| Example 9 | 43 | 675 | 0.081 | 83 |
| Example 10 | 53 | 692 | 0.083 | 85 |
| Example 11 | 46 | 703 | 0.083 | 81 |
| Example 12 | 49 | 674 | 0.085 | 82 |
| Example 13 | 45 | 697 | 0.084 | 84 |
| Example 14 | 46 | 684 | 0.086 | 85 |
| Comparative Example 1 | 31 | 512 | 0.054 | 63 |
| Comparative Example 2 | 32 | 533 | 0.057 | 61 |

According to the performance tests in Table 3, it can be seen that for the resin composition prepared by combining the PBAT resin compositions provided by Examples 1-14 of the present application with PLA resin, filler, and additive, after the blown-film process, the tensile strength is 42-53 MPa, the elongation at break is 666-712%, the puncture work/-thickness reaches 0.081-0.091 kN/mm, the gloss is as high as 80-87%; compared with the resin compositions provided by

Comparative Examples 1-2, the resin compositions provided by Examples 1-14 of the present application have better performance in terms of the tensile strength, elongation at break, puncture resistance, and gloss because the mass content of cyclopentylidene conjugated structural compound is 0.05-100 ppm, which provides good basic properties such as mechanical properties and hue, whereby the resin compositions still have excellent performance after further combined with the PLA resin, filler, and additive and can fully satisfy the application requirements in a variety of film bag products.

## Claims

1. A PBAT resin composition, comprising a PBAT resin and a cyclopentylidene conjugated structural compound; the PBAT resin composition contains the cyclopentylidene conjugated structural compound by a mass content of 0.05 ppm-100 ppm; and
the cyclopentylidene conjugated structural compound comprises 2-cyclopentylidenecyclopentanone and/or 2,5-dicyclopentylidenecyclopentanone.

2. The PBAT resin composition according to claim 1, wherein the PBAT resin has a weight average molecular weight of 70000-200000 g/mol, determined as indicated in the description.

3. The PBAT resin composition according to claim 1 or 2, wherein the PBAT resin has a melt mass-flow rate of 1-10 g/10 min at 190°C and 1.25 kg.

4. The PBAT resin composition according to any one of claims 1-3, wherein the PBAT resin composition contains the cyclopentylidene conjugated structural compound by a mass content of 0.1 ppm-80 ppm.

5. The PBAT resin composition according to any one of claims 1-4, wherein the PBAT resin composition contains 2-cyclopentylidenecyclopentanone by a mass content of 0.05-60 ppm.

6. The PBAT resin composition according to any one of claims 1-4, wherein the PBAT resin composition contains 2,5-dicyclopentylidenecyclopentanone by a mass content of 0.05-30 ppm.

7. A preparation method for the PBAT resin composition according to any one of claims 1-6, comprising: mixing the PBAT resin and the cyclopentylidene conjugated structural compound uniformly to obtain the PBAT resin composition.

8. A preparation method for the PBAT resin composition according to any one of claims 1-6, comprising the following steps: subjecting adipic acid, terephthalic acid and 1,4-butanediol to an esterification reaction to obtain an oligomer; wherein subjecting the oligomer to a polycondensation reaction to obtain the PBAT resin composition; the esterification reaction has an esterification rate of more than or equal to 96%, determined as indicated in the description, and the polycondensation reaction is performed at a temperature of 240-250°C.

9. The preparation method according to claim 8, wherein a molar ratio of adipic acid to terephthalic acid is (0.1-9.0): 1;

   optionally, a ratio of a total molar amount of adipic acid and terephthalic acid to a molar amount of 1,4-butanediol is 1: (1.1-2.0);
   optionally, the esterification reaction is performed in the presence of a catalyst;
   optionally, the catalyst is a titanium-based catalyst;
   optionally, the catalyst is selected from any one or a combination of at least two of tetra-n-butyl titanate, tetraisopropyl titanate, tetraisobutyl titanate, tetraisooctyl titanate, titanium acetate, titanium lactate, titanium tartrate, titanium citrate, titanium glycolate, titanium propanediol, or titanium butanediol;
   optionally, based on the total mass of the adipic acid, terephthalic acid, and 1,4-butanediol is 100%, a mass of titanium in the catalyst is 50 ppm-150 ppm.

10. The preparation method according to claim 8 or 9, wherein the esterification reaction is performed at a temperature of 210-240°C;

   optionally, the esterification reaction is performed for a period of 1.5-4 h;
   optionally, the esterification reaction is performed in a protective atmosphere;
   optionally, the protective atmosphere is a nitrogen atmosphere and/or an argon atmosphere;
   optionally, the polycondensation reaction is performed at a pressure of 5-100 Pa;

optionally, after the esterification reaction is completed, the reaction system is depressurized to 5-100 Pa within 30 min;
optionally, the polycondensation reaction is performed for a period of 2-4 h;
optionally, the preparation method further comprises steps of extrusion and granulation after the polycondensation reaction.

**11.** The preparation method according to any one of claims 8-10, wherein the preparation method specifically comprises the following steps:

(1) subjecting adipic acid, terephthalic acid, and 1,4-butanediol to an esterification reaction in the presence of a titanium-based catalyst to obtain an oligomer; the esterification reaction is performed in a protective atmosphere at a temperature of 210-240°C for a period of 1.5-4 h; the esterification reaction has an esterification rate of more than or equal to 96%; and
(2) after the esterification reaction in step (1) is completed, depressurizing the system to 5-100 Pa in 30 min and performing a polycondensation reaction, wherein the polycondensation reaction is performed at a temperature of 240-250°C for a period of 2-4 h, to obtain the PBAT resin composition.

**12.** A resin composition, comprising the following components in parts by weight:

| | |
|---|---|
| PBAT resin composition | 60-100 parts; |
| polylactic acid | 0-40 parts; and |
| filler | 0-35 parts; |

wherein the PBAT resin composition is the PBAT resin composition according to any one of claims 1-6; and the polylactic acid and the filler are required not to be 0 parts by weight concurrently.

**13.** The resin composition according to claim 12, wherein the polylactic acid has a melt mass-flow rate of 1-10 g/10 min at 190°C and 2.16 kg;

optionally, the filler is an inorganic filler and/or an organic filler;
optionally, the resin composition further comprises an additive in 0.01-5 parts by weight.

**Patentansprüche**

**1.** PBAT-Harzzusammensetzung, umfassend ein PBAT-Harz und eine cyclopentylidenkonjugierte Strukturverbindung, wobei die PBAT-Harzzusammensetzung die cyclopentylidenkonjugierte Strukturverbindung in einem Massenanteil von 0,05 ppm bis 100 ppm enthält und
die cyclopentylidenkonjugierte Strukturverbindung 2-Cyclopentylidencyclopentanon und/oder 2,5-Dicyclopentylidencyclopentanon umfasst.

**2.** PBAT-Harzzusammensetzung nach Anspruch 1, wobei das PBAT-Harz ein gewichtsmittleres Molekulargewicht von 70000 bis 200000 g/mol aufweist, bestimmt wie in der Beschreibung angegeben.

**3.** PBAT-Harzzusammensetzung nach Anspruch 1 oder 2, wobei das PBAT-Harz eine Schmelze-Massefließrate von 1 bis 10 g/10 min bei 190 °C und 1,25 kg aufweist.

**4.** PBAT-Harzzusammensetzung nach einem der Ansprüche 1 bis 3, wobei die PBAT-Harzzusammensetzung die cyclopentylidenkonjugierte Strukturverbindung in einem Massenanteil von 0,1 ppm bis 80 ppm enthält.

**5.** PBAT-Harzzusammensetzung nach einem der Ansprüche 1 bis 4, wobei die PBAT-Harzzusammensetzung 2-Cyclopentylidencyclopentanon in einem Massenanteil von 0,05 bis 60 ppm enthält.

**6.** PBAT-Harzzusammensetzung nach einem der Ansprüche 1 bis 4, wobei die PBAT-Harzzusammensetzung 2,5-Dicyclopentylidencyclopentanon in einem Massenanteil von 0,05 bis 30 ppm enthält.

**7.** Herstellungsverfahren für die PBAT-Harzzusammensetzung nach einem der Ansprüche 1 bis 6, umfassend: gleichmäßiges Mischen des PBAT-Harzes und der cyclopentylidenkonjugierten Strukturverbindung, um die PBAT-Harzzusammensetzung zu erhalten.

**8.** Herstellungsverfahren für die PBAT-Harzzusammensetzung nach einem der Ansprüche 1 bis 6, umfassend die folgenden Schritte: Unterziehen von Adipinsäure, Terephthalsäure und 1,4-Butandiol einer Veresterungsreaktion, um ein Oligomer zu erhalten, wobei das Oligomer einer Polykondensationsreaktion unterzogen wird, um die PBAT-Harzzusammensetzung zu erhalten, die Veresterungsreaktion eine Veresterungsrate von größer oder gleich 96 % aufweist, bestimmt wie in der Beschreibung angegeben, und die Polykondensationsreaktion bei einer Temperatur von 240 bis 250 °C durchgeführt wird.

**9.** Herstellungsverfahren nach Anspruch 8, wobei ein Molverhältnis von Adipinsäure zu Terephthalsäure (0,1 bis 9,0):1 beträgt,

ein Verhältnis der gesamten Stoffmenge von Adipinsäure und Terephthalsäure zu einer Stoffmenge von 1,4-Butandiol optional 1:(1,1 bis 2,0) beträgt,
die Veresterungsreaktion optional in Gegenwart eines Katalysators durchgeführt wird,
der Katalysator optional ein titanbasierter Katalysator ist,
der Katalysator optional aus einem beliebigen oder einer Kombination aus mindestens zwei von folgenden Stoffen ausgewählt ist: Tetra-n-butyl-titanat, Tetraisopropyl-titanat, Tetraisobutyl-titanat, Tetraisooctyl-titanat, Titanylacetat, Titanyllactat, Titanyltartrat, Titanylcitrat, Titanylglycolat, Titanpropanediol oder Titanbutandiol,
eine Masse an Titan in dem Katalysator basierend darauf, dass die Gesamtmasse von Adipinsäure, Terephthalsäure und 1,4-Butandiol 100 % beträgt, optional 50 ppm bis 150 ppm beträgt.

**10.** Herstellungsverfahren nach Anspruch 8 oder 9, wobei die Veresterungsreaktion bei einer Temperatur von 210 bis 240 °C durchgeführt wird,

die Veresterungsreaktion optional über einen Zeitraum von 1,5 bis 4 h durchgeführt wird,
die Veresterungsreaktion optional in einer Schutzatmosphäre durchgeführt wird,
die Schutzatmosphäre optional eine Stickstoffatmosphäre und/oder eine Argonatmosphäre ist,
die Polykondensationsreaktion optional bei einem Druck von 5 bis 100 Pa durchgeführt wird,
das Reaktionssystem optional nach Abschluss der Veresterungsreaktion innerhalb von 30 min auf 5 bis 100 Pa entspannt,
die Polykondensationsreaktion optional über einen Zeitraum von 2 bis 4 h durchgeführt wird,
das Herstellungsverfahren optional ferner Schritte der Extrusion und Granulierung nach der Polykondensationsreaktion umfasst.

**11.** Herstellungsverfahren nach einem der Ansprüche 8 bis 10, wobei das Herstellungsverfahren insbesondere die folgenden Schritte umfasst:

(1) Unterziehen von Adipinsäure, Terephthalsäure und 1,4-Butandiol einer Veresterungsreaktion in Gegenwart eines titanbasierten Katalysators, um ein Oligomer zu erhalten, wobei die Veresterungsreaktion in einer Schutzatmosphäre bei einer Temperatur von 210 bis 240 °C über einen Zeitraum von 1,5 bis 4 h durchgeführt wird und die Veresterungsreaktion eine Veresterungsrate von größer oder gleich 96 % aufweist,
(2) nach Abschluss der Veresterungsreaktion in Schritt (1) Entspannen des Systems innerhalb von 30 min auf 5 bis 100 Pa und Durchführen einer Polykondensationsreaktion, wobei die Polykondensationsreaktion bei einer Temperatur von 240 bis 250 °C über einen Zeitraum von 2 bis 4 h durchgeführt wird, um die PBAT-Harzzusammensetzung zu erhalten.

**12.** Harzzusammensetzung, umfassend die folgenden Komponenten in Gewichtsteilen:

| | |
|---|---|
| PBAT-Harzzusammensetzung | 60 bis 100 Teile; |
| Polymilchsäure | 0 bis 40 Teile und |
| Füllstoff | 0 bis 35 Teile, |

wobei die PBAT-Harzzusammensetzung die PBAT-Harzzusammensetzung nach einem der Ansprüche 1 bis 6 ist und
wobei die Polymilchsäure und der Füllstoff nicht gleichzeitig 0 Gewichtsteile betragen dürfen.

13. Harzzusammensetzung nach Anspruch 12, wobei die Polymilchsäure eine Schmelze-Massefließrate von 1 bis 10 g/10 min bei 190 °C und 2,16 kg aufweist,

der Füllstoff optional ein anorganischer Füllstoff und/oder ein organischer Füllstoff ist,
die Harzzusammensetzung optional ferner ein Additiv in 0,01 bis 5 Gewichtsteilen umfasst.

**Revendications**

1. Composition de résine PBAT, comprenant une résine PBAT et un composé structural conjugué de cyclopentylidène ; la composition de résine PBAT contient le composé structural conjugué de cyclopentylidène selon une teneur en masse de 0,05 ppm-100 ppm ; et
le composé structurel conjugué de cyclopentylidène comprend de la 2-cyclopentylidènecyclopentanone et/ou de la 2,5-dicyclopentylidènecyclopentanone.

2. Composition de résine PBAT selon la revendication 1, dans laquelle la résine PBAT présente un poids moléculaire moyen en poids de 70000-200000 g/mol, déterminé comme indiqué dans la description.

3. Composition de résine PBAT selon la revendication 1 ou 2, dans laquelle la résine PBAT présente un indice de fluidité à chaud de 1-10 g/10 min à 190°C et 1,25 kg.

4. Composition de résine PBAT selon l'une quelconque des revendications 1-3, dans laquelle la composition de résine PBAT contient le composé structurel conjugué de cyclopentylidène selon une teneur en masse de 0,1 ppm-80 ppm.

5. Composition de résine PBAT selon l'une quelconque des revendications 1-4, dans laquelle la composition de résine PBAT contient de la 2-cyclopentylidènecyclopentanone selon une teneur en masse de 0,05-60 ppm.

6. Composition de résine PBAT selon l'une quelconque des revendications 1-4, dans laquelle la composition de résine PBAT contient de la 2,5-dicyclopentylidènecyclopentanone selon une teneur en masse de 0,05-30 ppm.

7. Procédé de préparation de la composition de résine PBAT selon l'une quelconque des revendications 1-6, comprenant : le mélange uniforme de la résine PBAT et du composé structurel conjugué de cyclopentylidène pour obtenir la composition de résine PBAT.

8. Procédé de préparation de la composition de résine PBAT selon l'une quelconque des revendications 1-6, comprenant les étapes suivantes : soumission de l'acide adipique, de l'acide téréphtalique et du 1,4-butanediol à une réaction d'estérification pour obtenir un oligomère ; dans lequel la soumission de l'oligomère à une réaction de polycondensation pour obtenir la composition de résine PBAT ; la réaction d'estérification présente un taux d'estérification supérieur ou égal à 96 %, déterminé comme indiqué dans la description, et la réaction de polycondensation est
effectuée à une température de 240-250°C.

9. Procédé de préparation selon la revendication 8, dans lequel un rapport molaire de l'acide adipique à l'acide téréphtalique est de (0,1-9,0):1 ;

optionnellement, un rapport d'une quantité molaire totale d'acide adipique et d'acide téréphtalique à une quantité molaire de 1,4-butanediol est de 1:(1,1-2,0) ;
optionnellement, la réaction d'estérification est effectuée en présence d'un catalyseur ;
optionnellement, le catalyseur est un catalyseur à base de titane ;
optionnellement, le catalyseur est choisi parmi l'un quelconque ou une combinaison d'au moins deux parmi le titanate de tétra-n-butyle, le titanate de tétraisopropyle, le titanate de tétraisobutyle, le titanate de tétraisooctyle, l'acétate de titane, le lactate de titane, le tartrate de titane, le citrate de titane, le glycolate de titane, le propanediol de titane ou le butanediol de titane ;
optionnellement, sur la base de la masse totale de l'acide adipique, de l'acide téréphtalique et du 1,4-butanediol étant 100%, une masse de titane dans le catalyseur est de 50 ppm-150 ppm.

10. Procédé de préparation selon la revendication 8 ou 9, dans lequel la réaction d'estérification est effectuée à une température de 210-240°C ;

optionnellement, la réaction d'estérification est effectuée pendant une période de 1,5-4 h ;
optionnellement, la réaction d'estérification est effectuée dans une atmosphère protectrice ;
optionnellement, l'atmosphère protectrice est une atmosphère d'azote et/ou une atmosphère d'argon ;
optionnellement, la réaction de polycondensation est effectuée à une pression de 5-100 Pa ;
optionnellement, à l'issue de la réaction d'estérification, le système de réaction est dépressurisé à 5-100 Pa en 30 min ;
optionnellement, la réaction de polycondensation est effectuée pendant une période de 2-4 h ;
optionnellement, le procédé de préparation comprend en outre des étapes d'extrusion et de granulation après la réaction de polycondensation.

**11.** Procédé de préparation selon l'une quelconque des revendications 8-10, dans lequel le procédé de préparation comprend spécifiquement les étapes suivantes :

(1) la soumission de l'acide adipique, de l'acide téréphtalique et du 1,4-butanediol à une réaction d'estérification en présence d'un catalyseur à base de titane pour obtenir un oligomère ; la réaction d'estérification est effectuée dans une atmosphère protectrice à une température de 210-240°C pendant une période de 1,5-4 h ; la réaction d'estérification présente un taux d'estérification supérieur ou égal à 96 % ; et
(2) à l'issue de la réaction d'estérification dans l'étape (1), la dépressurisation du système à 5-100 Pa en 30 min et la réalisation d'une réaction de polycondensation, dans lequel la réaction de polycondensation est effectuée à une température de 240-250°C pendant une période de 2-4 h, pour obtenir la composition de résine PBAT.

**12.** Composition de résine, comprenant les composants suivants en parties en poids :

| | |
|---|---|
| Composition de résine PBAT | 60-100 parties ; |
| acide polylactique | 0-40 parties ; et |
| charge | 0-35 parties ; |

dans laquelle la composition de résine PBAT est la composition de résine PBAT selon l'une quelconque des revendications 1-6 ; et
l'acide polylactique et la charge ne doivent pas tous les deux valoir 0 parties en poids.

**13.** Composition de résine selon la revendication 12, dans laquelle l'acide polylactique présente un indice de fluidité à chaud de 1-10 g/10 min à 190°C et 2,16 kg ;

optionnellement, la charge est une charge inorganique et/ou une charge organique ;
optionnellement, la composition de résine comprend en outre un additif dans 0,01-5 parties en poids.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- CN 101864068 A
- CN 113248695 A
- CN 113278138 A
- CN 105585827 A